# FASCICULE DE BREVET EUROPEEN

(11) **EP 1 600 738 B1**
(45) Date de publication et mention de la délivrance du brevet: **30.11.2016**
(21) Numéro de dépôt: 05291085.8
(22) Date de dépôt: 20.05.2005
(51) Int. Cl.: G01D 5/14

(54) **Dispositif de détéction magnétique à deux chemins de circulation du flux magnétique**
Magnetische Detektionsvorrichtung mit einem Doppelkreis für den Magnetfluss
Magnetic detection device with a dual magnetic flux path

(30) Priorité: 26.05.2004 FR 0405667
(43) Date de publication de la demande: 30.11.2005
(73) Titulaire: Valeo Systèmes de Contrôle Moteur, 95520 Osny (FR)
(72) Inventeur: Maerky, Christophe, 95310 Saint-Ouen L'Aumone (FR); Rampillon, Florent, 78600 Maisons Laffitte (FR)
(74) Mandataire: Cardon, Nicolas

(56) Documents cités:
- DE-U- 9 017 076
- FR-A- 2 331 774
- US-A- 3 060 370
- US-A- 5 032 812
- US-A- 5 196 794
- US-A1- 2003 178 990

## Description

La présente invention concerne un dispositif de détection de présence d'un élément magnétique.

Il existe des dispositifs de détection comprenant un aimant permanent associé à un capteur de flux magnétique par une armature de circulation vers le capteur d'un flux magnétique émis par l'aimant. Le flux magnétique perçu par le capteur varie en fonction de la présence ou de l'absence de l'élément magnétique en regard de l'aimant et le capteur fournit un signal électrique proportionnel à ce flux, à partir duquel il est possible de déterminer si l'élément est présent ou pas.

La précision de la détection dépend donc de l'ampleur de la variation du flux magnétique qui est d'autant plus facilement détectable qu'elle est importante et franche. Il est donc nécessaire d'utiliser des aimants permanents de forte puissance pour obtenir une variation proportionnellement importante. Ceci constitue une contrainte non négligeable. En outre, dans certaines applications, le dispositif de détection peut être soumis à des élévations de température susceptibles de provoquer une diminution de la puissance de l'aimant. Les variations du flux magnétique sont alors d'amplitude plus faibles et sont plus difficiles à détecter. Il est donc nécessaire d'effectuer un traitement relativement lourd du signal provenant du capteur pour faire ressortir ces variations et permettre une détection précise de présence.

Le brevet US 5032 812 divulgue un dispositif de détection selon le préambule de le revendication 1

Un but de l'invention est de fournir un dispositif de détection permettant une bonne précision de la détection en limitant le recours à des traitements du signal fourni par le capteur.

A cet effet, on prévoit, selon l'invention, un dispositif de détection de présence d'un élément magnêtique selon la revendication 1.

La présence de l'élément magnétique en regard du premier bras modifie la réluctance du premier chemin et donc la répartition du flux magnétique dans les deux chemins. Cette modification, qui révèle la présence de l'élément magnétique, est détectable relativement facilement,

Avantageusement, le premier chemin a un entrefer total inférieur à un entrefer total du deuxième chemin.

Ainsi, lorsque l'élément magnétique arrive en regard du détecteur, ce n'est pas uniquement la valeur du flux magnétique qui change mais également le sens de circulation de celui-ci dans le capteur. Le signal fourni par le capteur présente alors de brusques variations qu'il est encore plus facile de détecter.

De préférence alors, le premier chemin a un entrefer total inférieur à un entrefer total du deuxième chemin.

Ainsi, la différence de réluctance entre les deux chemins de circulation est obtenue de manière particulièrement simple.

Le dispositif de détection est de structure relativement simple et facile à réaliser.

Avantageusement le deuxième bras s'étend parallèlement à l'aimant d'un côté de celui-ci opposé au premier bras.

La structure du dispositif de détection est alors particulièrement compacte.

De préférence, le dispositif de détection comprend deux aimants permanents et deux armatures disposés de part et d'autre du capteur.

Ceci permet d'augmenter la puissance du signal fourni par le capteur.

D'autres caractéristiques de l'invention ressortiront à la lecture de la description qui suit de modes de réalisation particuliers non limitatifs de l'invention.

Il sera fait référence aux dessins annexés, parmi lesquels :
- la figure 1 est une vue schématique en perspective du dispositif de détection conforme à un premier mode de réalisation de l'invention,
- la figure 2 est une vue schématique en perspective de ce dispositif de détection selon un angle de vue différent de celui de la figure 1,
- la figure 3 est une vue schématique en coupe selon le plan III de la figure 2 de ce dispositif de détection, en l'absence d'élément magnétique,
- la figure 4 est une vue analogue à celle de la figure 3 de ce dispositif de détection, en présence de l'élément magnétique,
- la figure 5 est une vue schématique en perspective du dispositif de détection conforme à un deuxième mode de réalisation l'invention,
- la figure 6 est une vue schématique en perspective de ce dispositif de détection,
- la figure 7 est une vue schématique en coupe de ce dispositif de détection selon le plan VII de la figure 5,
- la figure 8 est une vue schématique en coupe de ce dispositif de détection selon le plan VIII de la figure 5.

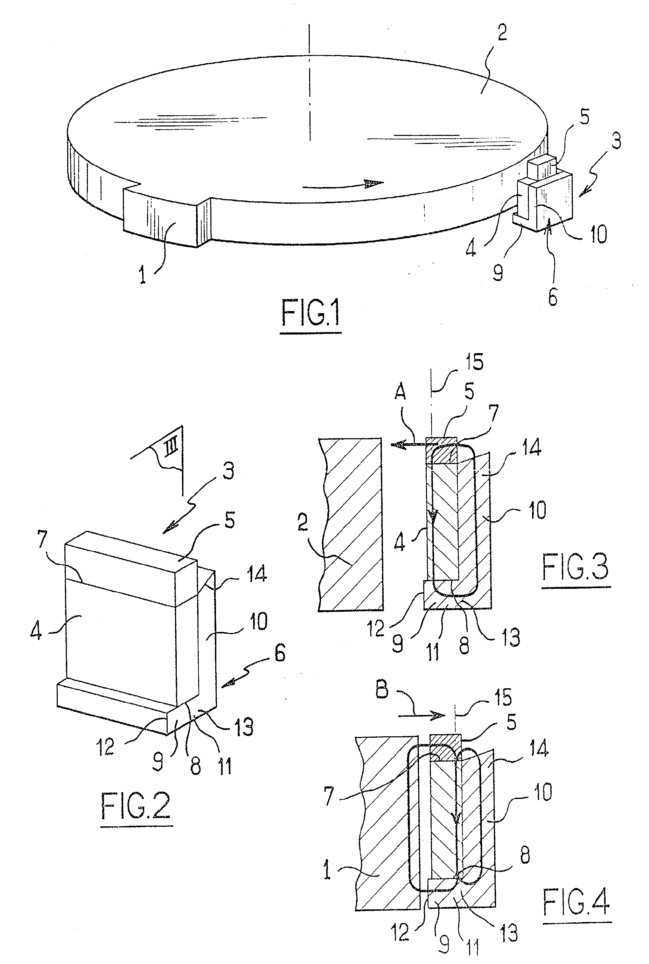

En référence aux figures 1 à 4, le dispositif de détection selon le premier mode de l'invention est ici décrit en application à la détection de présence d'un élément magnétique 1 solidaire d'un disque 2 monté pour pivoter sur un bâti non représenté sur lequel le dispositif de détection est monté. La détection de la présence de l'élément magnétique 1 en regard du dispositif de détection permet de déterminer la position angulaire du disque 2 par rapport au bâti ou de compter le nombre de tours réalisés par le disque 2. Dans un exemple particulier d'application de l'invention, le disque 2 est fixé à une extrémité d'un arbre à cames de moteur à pistons et la détection de la présence de l'élément magnétique est utilisée pour identifier le piston arrivant au point mort haut.

Le dispositif de détection, généralement désigné en 3, comporte un aimant permanent 4 associé à un capteur 5 de flux magnétique par l'intermédiaire d'une armature généralement désignée en 6.

L'aimant permanent 4 a un premier pôle magnétique 7 et un deuxième pôle magnétique 8 alignés sensiblement selon l'axe de pivotement du disque 2 pour émettre un champ magnétique selon cette direction.

Le capteur 5 est monté au voisinage du premier pôle magnétique 7. Le capteur 5 est ici un capteur à effet HALL.

L'armature 6 comprend un premier bras (ou portion d'armature) 9 et un deuxième bras (ou portion d'armature) 10.

Le bras 9 a une extrémité 11 reliée au deuxième pôle magnétique 8 et s'étend transversalement par rapport à l'aimant permanent 4 pour avoir, à l'opposé de l'extrémité 11, une extrémité 12 ayant une face active qui est en saillie de l'aimant permanent 4 et qui est écartée du capteur 5.

Le bras 10 a une extrémité 13 reliée au deuxième pôle magnétique 8 et, à l'opposé, une extrémité 14 qui s'étend à proximité du capteur 5. L'extrémité 14 a une face active séparée de la face du capteur 5 adjacente par un entrefer E. Le bras 10 est replié le long de l'aimant permanent 4 pour s'étendre d'un côté de l'aimant permanent 4 opposé au côté en saillie duquel s'étend le bras 9.

L'armature 6 étant ici réalisée en une seule pièce, les extrémités 11 et 13 sont confondues.

Le bras 9 et le bras 10 définissent deux chemins distincts de circulation du flux magnétique engendré par l'aimant permanent 4. Ces deux chemins ont un tronçon commun sur lequel se trouvent l'aimant permanent 4 et le capteur 5. Ces deux chemins de circulation canalisent le flux magnétique pour l'amener dans le capteur 5 selon deux sens de circulation différents.

Le fonctionnement du dispositif de détection va maintenant être décrit.

En référence à la figure 3, lorsque l'élément magnétique 1 n'est pas en regard du détecteur 3, l'entrefer total du chemin défini par le bras 9 (qui est égal à la distance séparant l'extrémité 12 et le capteur 5) est supérieur à l'entrefer total du chemin, défini par le bras 10 (cet entrefer total est ici égal au seul entrefer existant sur ce chemin, à savoir l'entrefer séparant l'extrémité 14 et le capteur 5). La majeure partie du flux magnétique produit par l'aimant permanent 4 (représenté en trait gras sur la figure 3) suit alors le chemin défini par le bras 10 tandis qu'une partie moindre de celui-ci (non représentée), passe par le bras 9. Le sens de circulation du flux au niveau du capteur 5 est indiqué par la flèche A sur la figure 3.

En référence à la figure 4, lorsque l'élément magnétique 1 est en regard du détecteur 3, l'élément magnétique 1 participe à la circulation du flux magnétique. L'entrefer total du chemin défini par le bras 9 (qui est alors égal à la somme des distances séparant l'élément magnétique 1 de l'extrémité 12 et du capteur 5) est inférieur à l'entrefer total du chemin défini par le bras 10. Le flux magnétique produit par l'aimant permanent 4 (et représenté en trait gras à la figure 4) se répartit alors sur les deux chemins, une part importante du flux passant par le bras 9. On a représenté en traits mixtes sur les figures 3 et 4, au niveau du capteur 5, une ligne de partage 15 du flux magnétique entre ces deux chemins. On constate que cette ligne s'est déplacée d'un côté à l'autre du point sensible du capteur 5 (que l'on suppose ici être au milieu du capteur 5). On peut voir qu'au niveau de ce point sensible, le sens de circulation du flux magnétique s'est inversé entre la position de la figure 3 et celle de la figure 4 (le sens de circulation du flux au niveau du capteur 5 est indiqué par la flèche B sur la figure 4).

Lors du pivotement du disque 2, le signal électrique fourni par le capteur 5 subit une brusque variation à chaque fois que l'élément magnétique 1 arrive dans une position en regard du détecteur 3 ou quitte cette position. La pente de cette variation est raide et proche de la verticale. Le signal produit se rapproche ainsi d'un signal carré dont l'exploitation est relativement facile et ne nécessite pas un traitement important.

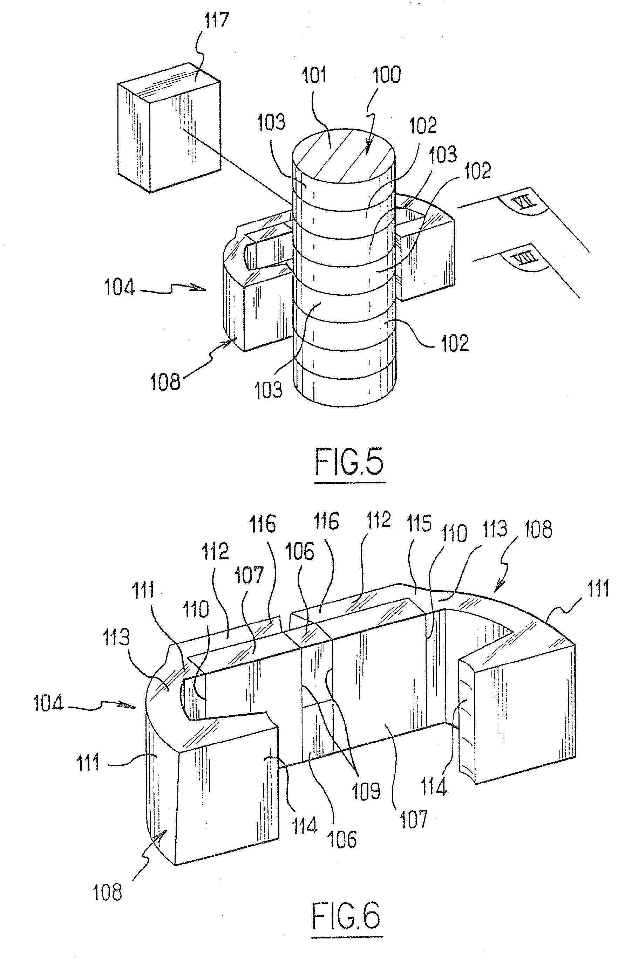

En référence aux figures 5 à 8, le dispositif de détection selon le deuxième mode de réalisation de l'invention est ici décrit en application à la détection de position d'une tige mobile, généralement désignée en 100, par rapport à un bâti fixe non représenté sur lequel le dispositif de détection est monté.

La tige 100 comporte un noyau 101, en matériau magnétique ou amagnétique, extérieurement pourvu de parties magnétiques 102 et de parties amagnétiques 103 disposées en alternance.

De préférence au moins une des parties magnétiques 102 et/ou des parties amagnétiques 103 a une largeur différente pour former un motif de référence représentatif d'un point particulier sur l'axe de la tige 100, les autres parties magnétiques 102 et/ou parties amagnétiques 103 constituant des motifs relatifs qui permettent de localiser un point sur l'axe de la tige 100 en partant d'un motif de référence comme cela sera expliqué par la suite.

Le dispositif de détection, généralement désigné en 104, comprend une barrette de capteurs de flux magnétique 106 adjacents (dont deux seulement sont représentés aux figures).

De chaque côté de la barrette sont montés symétriquement un aimant permanent 107 et une armature généralement désignée en 108.

Chaque aimant permanent 107 a un premier pôle magnétique 109 et un deuxième pôle magnétique 110 alignés selon une direction sensiblement tangentielle de la tige 100 pour émettre un champ magnétique selon cette direction.

Les capteurs 106 sont montés au voisinage du premier pôle magnétique 109. Les capteurs 106 sont des capteurs à effet HALL.

Chaque armature 108 comprend un premier bras (ou portion d'armature) 111 et un deuxième bras (ou portion d'armature) 112.

Le bras 111, qui a ici une forme recourbée, a une extrémité 113 reliée au deuxième pôle magnétique 110 et s'étend en regard d'un côté de l'aimant permanent 107 de manière espacée de celui-ci pour avoir, à l'opposé de l'extrémité 113, une extrémité 114 ayant une face active qui est écartée du capteur 106.

Le bras 112 a une extrémité 115 reliée au deuxième pôle magnétique 110 et, à l'opposé, une extrémité 116 qui s'étend à proximité du capteur 106. L'extrémité 116 a une face active séparée d'une face du capteur 106 par un entrefer E. Le bras 112 est replié le long de l'aimant permanent 107 pour s'étendre d'un côté de l'aimant permanent 107 opposé à celui en regard duquel s'étend le bras 111.

Le bras 111 et le bras 112 définissent deux chemins distincts de circulation du flux magnétique engendré par l'aimant permanent 107. Ces deux chemins de circulation canalisent le flux magnétique pour l'amener dans le capteur 106 selon deux sens de circulation différents.

La barrette est fixée sur le bâti de telle manière que les capteurs 106 se succèdent selon une direction parallèle à la tige 100 et que les extrémités 114 et le capteur 106 de chaque détecteur 105 aient des faces en regard de la surface extérieure de la tige 100.

La tige 100 est séparée, d'une part, de la face active de l'extrémité 114 du bras 111 et, d'autre part, du capteur 106 par des distances e dont la somme est inférieure à l'entrefer total (ou somme des entrefers) du chemin défini par le bras 112 (l'entrefer total est ici égal au seul entrefer existant, à savoir celui référencé E séparant l'extrémité 116 et le capteur 106).

Du fait de la disposition et de la juxtaposition des champs des capteurs 106 (également appelés champ ou cônes de sensibilité), la barrette a un champ global couvrant une zone de la surface extérieure de la tige 100 qui présente une dimension axiale supérieure à une dimension axiale des motifs de référence. Les capteurs 106 sont reliés à une unité de traitement 117 dans laquelle sont mémorisées les positions des motifs de référence sur la tige 100.

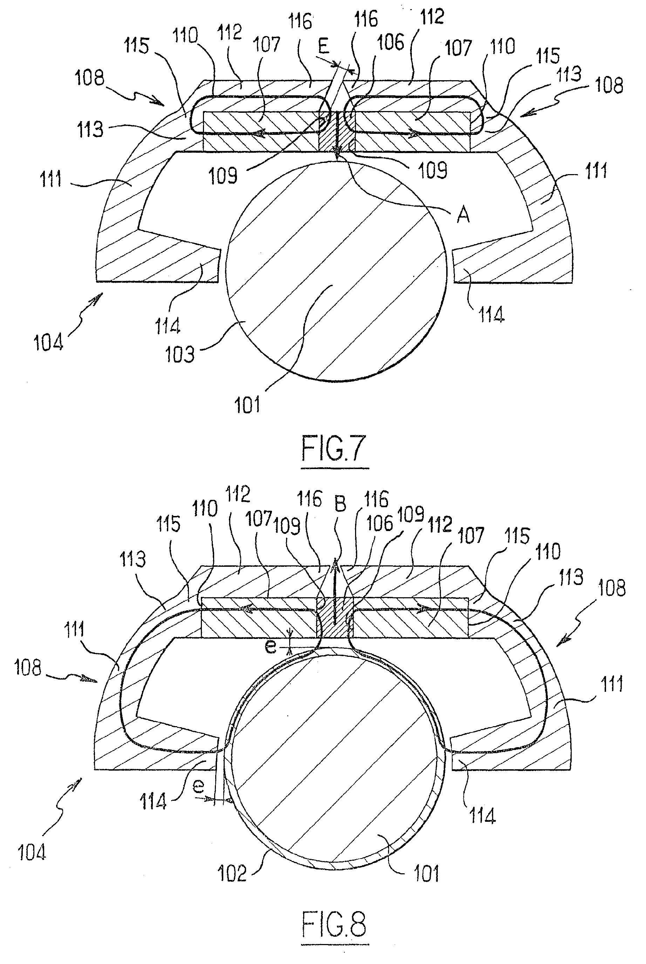

Le fonctionnement du dispositif de détection va maintenant être décrit en référence aux figures 7 et 8 dans lesquelles, pour des raisons de clarté, seuls les chemins dont le sens de circulation est prépondérant au niveau des capteurs ont été représentés. Le fonctionnement est cependant analogue à celui décrit en relation avec les figures 3 et 4.

En référence à la figure 7, lorsqu'un détecteur 105 est en regard d'une partie amagnétique 103, l'entrefer total du chemin défini par le bras 111 (qui est égal à la distance séparant l'extrémité 116 du capteur 106) est supérieur à l'entrefer total du chemin défini par le bras 112. Le flux magnétique produit par l'aimant permanent 107 (représenté en trait gras sur la figure 7) suit alors majoritairement le chemin défini par le bras 112. Le sens de circulation du flux au niveau du point sensible du capteur 106 est indiqué par la flèche A sur la figure 7.

En référence à la figure 8, lorsque ce détecteur 106 est en regard d'une partie magnétique 102, la partie magnétique 102 participe à la circulation du flux magnétique. L'entrefer total du chemin défini par le bras 111 (qui est alors égal à la somme des distances e séparant la partie magnétique 102 de l'extrémité 114 et du capteur 106) est inférieur à l'entrefer total E du chemin défini par le bras 112. Le flux magnétique produit par l'aimant permanent 107 (et représenté en trait gras à la figure 8) suit également le chemin défini par le bras 111 et se répartit dans les deux chemins. Le sens de circulation du flux au niveau du point sensible du capteur 106 est indiqué par la flèche B sur la figure 8.

On peut voir sur les figures 7 et 8 que le sens de circulation A est opposé au sens de circulation B.

Lors du coulissement de la tige 100, le signal électrique fourni par le capteur 106 subit une brusque variation à chaque fois qu'une partie magnétique 102 et une partie amagnétique 103 se succèdent en regard du détecteur 105. La pente de cette variation est raide et proche de la verticale. Le signal produit se rapproche ainsi d'un signal carré dont l'exploitation est relativement facile et ne nécessite pas un traitement important.

Ainsi, après qu'un motif de référence a été identifié et que le coulissement se poursuit, l'unité de traitement 117 effectue un comptage des motifs relatifs de sorte que l'unité de traitement peut à tout moment déterminer la distance séparant la zone de la tige 100 en regard des détecteurs 105 et le motif de référence identifié. A partir de cette information, l'unité de traitement peut déterminer la position de la tige 100 par rapport au bâti.

Bien entendu, l'invention n'est pas limitée au mode de réalisation décrit et on peut y apporter des variantes de réalisation sans sortir du cadre de l'invention tel que défini par les revendications.

En particulier, les capteurs peuvent être également des capteurs magnétorésistifs.

Bien que, dans le mode de réalisation décrit, la différence de réluctance au passage du flux entre les deux chemins de circulation soit obtenue par une différence d'entrefer total entre les deux chemins, cette différence de réluctance peut résulter également d'une différence de longueurs des deux chemins et/ou de perméabilité magnétique.

Bien que, dans les modes de réalisation décrits, seule la réluctance d'un des chemins varie avec la présence de l'élément magnétique, il est possible d'agencer les deux chemins pour que leur réluctance varie selon la présence ou l'absence de l'élément magnétique. La détection de l'élément magnétique résulte alors d'une différence de variation entre ces deux chemins.

Par ailleurs, il n'est pas indispensable que le flux magnétique change de sens au niveau du point sensible du capteur selon que l'élément magnétique est présent ou absent. Il suffit juste que le flux magnétique subisse une variation en ce point.

Plusieurs capteurs peuvent être associés sous la forme d'une barrette ou être indépendants les uns des autres et par exemple simplement alignés sur une direction commune. A chaque capteur peuvent être associés une armature et un aimant. Un seul capteur peut également être utilisé par exemple lorsqu'on ne cherche qu'à compter les motifs sur la tige 100.

Plusieurs éléments magnétiques peuvent être associés au disque 2, par exemple pour former des motifs détectés par une succession de détecteurs comme dans le deuxième mode de réalisation. Un tel disque peut par exemple être monté à l'extrémité d'un vilebrequin pour détecter la position angulaire de celui-ci.

## Revendications

1. Dispositif de détection de présence d'un élément magnétique (1,102), le dispositif de détection comportant au moins un aimant (4, 107) permanent associé à un capteur (5, 106) de flux magnétique par au moins une armature (6, 108) de circulation vers le capteur d'un flux magnétique engendré par l'aimant,
l'armature comprenant un premier bras (9,111) et un deuxième bras (10,112) définissant respectivement un premier et un deuxième chemin de circulation du flux magnétique ayant un tronçon commun sur lequel se trouvent le capteur et l'aimant, au moins le premier chemin ayant une reluctance variable qui est réduite lorsque l'élément magnétique (1,102) est en regard du premier bras, **caractérisé en ce que** l'aimant (4, 107) possède un premier pôle magnétique (7, 109) au voisinage duquel est monté le capteur (5, 106) et un deuxième pôle magnétique (8, 110) auquel sont reliées une première extrémité (13, 115) du deuxième bras (10, 112) et une première extrémité (11, 113) du premier bras (9, 111), le deuxième bras ayant une deuxième extrémité (14, 116) qui s'étend à proximité du capteur et le premier bras s'étendant latéralement en saillie de l'aimant et possédant une deuxième extrémité (12, 114) qui est écartée du capteur de telle manière que la deuxième extrémité du premier bras et le capteur aient des faces en regard d'au moins une portion de l'élément magnétique (1,102) lorsque celui-ci est en regard du premier bras.

2. Dispositif de détection selon la revendication 1, le premier chemin et le deuxième chemin étant agencés pour que, lorsque l'élément magnétique est en regard du premier bras, le premier chemin présente une reluctance inférieure à une reluctance du deuxième chemin et que, au niveau du capteur, le flux circule dans le premier chemin selon un sens opposé à un sens de circulation du flux dans le deuxième chemin.

3. Dispositif de détection selon la revendication 2, le premier chemin ayant un entrefer total inférieur à un entrefer total du deuxième chemin.

4. Dispositif de détection selon l'une quelconque des revendications 1 à 3, le deuxième bras (10, 112) s'étendant le long de l'aimant (4, 107) d'un côté de celui-ci opposé au premier bras (9, 111).

5. Dispositif de détection selon la revendication 1, comprenant deux aimants (107) permanents et deux armatures (108) disposées de part et d'autre du capteur, chaque armature (108) comprenant un premier bras (111) et un deuxième bras (112) et pour chaque armature, le premier bras (111) et le deuxième bras (112) définissant respectivement un premier et un deuxième chemin de circulation du flux magnétique de l'aimant auquel l'armature est associée.

6. Dispositif de détection selon la revendication 1, **caractérisé en ce que** le capteur (5 ; 106) est un capteur à effet HALL.

## Patentansprüche

1. Vorrichtung zur Erfassung des Vorhandenseins eines magnetischen Elements (1, 102),
wobei die Erfassungsvorrichtung mindestens einen Dauermagneten (4, 107) umfasst, der einem Magnetflusssensor (5, 106) durch mindestens einen Magnetflussanker (6, 108) zu dem Sensor eines vom Magneten erzeugten Magnetflusses zugeordnet ist,
wobei der Anker einen ersten Arm (9, 111) und einen zweiten Arm (10, 112) umfasst, die einen ersten bzw. einen zweiten Flusskreis für den Magnetfluss mit einem gemeinsamen Abschnitt, auf dem sich der Sensor und der Magnet befinden, definieren, wobei mindestens der erste Kreis eine variable Reluktanz aufweist, die verringert ist, wenn sich das magnetische Element (1, 102) gegenüber dem ersten Arm befindet,
**dadurch gekennzeichnet, dass** der Magnet (4, 107) einen ersten Magnetpol (7, 109), in dessen Nähe der Sensor (5, 106) montiert ist, und einen zweiten Magnetpol (8, 110) umfasst, mit dem ein erstes Ende (13, 115) des zweiten Arms (10, 112) und ein erstes Ende (11, 113) des ersten Arms (9, 111) verbunden sind, wobei der zweite Arm ein zweites Ende (14, 116) hat, das sich in der Nähe des Sensors erstreckt, und wobei sich der erste Arm seitlich aus dem Magneten herausragend erstreckt und ein zweites Ende (12, 114) besitzt, das von dem Sensor entfernt ist, so dass das zweite Ende des ersten Arms und der Sensor Seiten aufweisen, die gegenüber mindestens einem Abschnitt des magnetischen Elements (1, 102) angeordnet sind, wenn sich dieses gegenüber dem ersten Arm befindet.

2. Erfassungsvorrichtung nach Anspruch 1, wobei der erste Kreis und der zweite Kreis derart vorgesehen sind, dass, wenn das magnetische Element gegenüber dem ersten Arm angeordnet ist, der erste Kreis eine geringere Reluktanz als eine Reluktanz des zweiten Kreises aufweist, und dass im Bereich des Sensors der Fluss in dem ersten Kreis in eine zur Flussrichtung des Flusses in dem zweiten Kreis entgegengesetzte Richtung fließt.

3. Erfassungsvorrichtung nach Anspruch 2, wobei der erste Kreis einen Gesamtmagnetspalt aufweist, der kleiner als der Gesamtmagnetspalt des zweiten Kreises ist.

4. Erfassungsvorrichtung nach einem der Ansprüche 1 bis 3, wobei sich der zweite Arm (10, 112) entlang des Magneten (4, 107) auf einer Seite desselben gegenüber dem ersten Arm (9, 111) erstreckt.

5. Erfassungsvorrichtung nach Anspruch 1, umfassend zwei Dauermagneten (107) und zwei Anker (108), die beiderseits des Sensors angeordnet sind, wobei jeder Anker (108) einen ersten Arm (111) und einen zweiten Arm (112) umfasst, und wobei für jeden Anker der erste Arm (111) und der zweite Arm (112) einen ersten bzw. einen zweiten Magnetflusskreis des Magneten, dem der Anker zugeordnet ist, definieren.

6. Erfassungsvorrichtung nach Anspruch 1, **dadurch gekennzeichnet, dass** der Sensor (5, 106) ein Halleffekt-Sensor ist.

## Claims

1. Device for detection of presence of a magnetic element (1, 102), the detection device comprising at least one permanent magnet (4, 107) associated with a magnetic flux sensor (5, 106) by at least one armature (6, 108) for circulation to the sensor of a magnetic flux engendered by the magnet, the armature comprising a first arm (9, 111) and a second arm (10, 112) defining respectively a first and a second circulation path for the magnetic flux having a common segment on which the sensor and the magnet are situated, at least the first path having a variable reluctance which is reduced when the magnetic element (1, 102) is opposite the first arm,
**characterized in that** the magnet (4, 107) possesses a first magnetic pole (7, 109) in the vicinity of which is mounted the sensor (5, 106) and a second magnetic pole (8, 110) to which are linked a first end (13, 115) of the second arm (10, 112) and a first end (11, 113) of the first arm (9, 111), the second arm having a second end (14, 116) which extends in proximity to the sensor and the first arm extending laterally protruding from the magnet and possessing a second end (12, 114) which is distanced from the sensor in such a way that the second end of the first arm and the sensor have faces opposite at least one portion of the magnetic element (1, 102) when the latter is opposite the first arm.

2. Detection device according to Claim 1, the first path and the second path being arranged so that, when the magnetic element is opposite the first arm, the first path exhibits a smaller reluctance than a reluctance of the second path and that, at the level of the sensor, the flux circulates in the first path in a direction opposite to a direction of circulation of the flux in the second path.

3. Detection device according to Claim 2, the first path having a smaller total air gap than a total air gap of the second path.

4. Detection device according to any one of Claims 1 to 3, the second arm (10, 112) extending along the magnet (4, 107) on an opposite side of the latter to the first arm (9, 111).

5. Detection device according to Claim 1, comprising two permanent magnets (107) and two armatures (108) disposed on either side of the sensor, each armature (108) comprising a first arm (111) and a second arm (112) and for each armature, the first arm (111) and the second arm (112) defining respectively a first and a second circulation path for the magnetic flux of the magnet with which the armature is associated.

6. Detection device according to Claim 1, **characterized in that** the sensor (5; 106) is a HALL-effect sensor.
